# EUROPEAN PATENT APPLICATION

(11) **EP 2 255 676 A1**
(43) Date of publication of application: **01.12.2010**
(21) Application number: 09160739.0
(22) Date of filing: 20.05.2009
(51) Int. Cl.: A23K 1/18, A23L 1/09, A23L 1/164, A23L 1/00, A01K 15/02

(54) **Flavored coating for foodstuff**

(71) Applicant: Firmenich SA, 1211 Genève 8 (CH)
(72) Inventor: Burden, Maryann, LEBANON, NJ 08833 (US); Munt, Howard, LAWRENCEVILLE, NJ 08648 (US); Zanone, John D., TOWACO, NJ 07082-1432 (US)
(74) Representative: Dale, Gavin Christopher

(57) **Abstract**

The invention relates to a flavored coating for an article such as a foodstuff, the flavored coating comprising a flavor, an edible wax for protecting the flavor, optionally a humectant and optionally a fat or hardened oil.

## Description

### Technical Field

The present invention relates to a flavored coating for a foodstuff, a foodstuff comprising the coating, a method of preparing a foodstuff comprising a flavored coating and the use of an edible wax in a coating to enhance flavor intensity and longevity.

### Background and Prior Art

Flavor delivery systems are well known in the art and have been studied in numerous publications such as Microencapsulation: Industrial Appraisal of Existing Technologies and Trends, Sébastien Gouin, Trends in Food Science & Technology 15 (2004) 330-347, as well as the publications referred to therein.

Flavors often require to be provided in encapsulated form in order to render them less susceptible to oxidation and to increase their shelf-life. This is especially relevant for volatile flavors. Encapsulation is also used to slow down the release profile of the flavor being consumed thereby enhancing the longevity of the perception of the flavor.

However, encapsulation is typically resource intensive and often requires significant knowhow in terms of processing to achieve successful encapsulation of the flavor.

It would therefore be desirable to provide a simple and economical system for protecting the flavor and enhancing the intensity and longevity of the flavor during consumption.

US4803082 describes a flavor delivery system for use in comestibles such as chewing gums comprising an encapsulating matrix consisting of lecithin, a fatty acid or a wax and a core consisting of a spray-dried flavor composition. The delivery system is prepared by providing a homogeneous hydrophobic molten mixture comprising a fat or wax, admixing the flavor composition to obtain homogeneity and spraying the molten mixture into a stream of flavor particles such that the mixture coats the particles to form a dry particulate delivery system. This remains a complicated process and product.

### Summary of the Invention

Accordingly, the present invention provides a flavored coating for an article, the flavored coating comprising a flavor, an edible wax for protecting the flavor, optionally a fat or hardened oil and optionally a humectant.

In a further aspect, the invention provides a foodstuff comprising a flavored coating as defined herein.

In another aspect, the invention provides a method of preparing an article comprising a flavored coating, comprising the steps of:
(i) preparing a fluid mixture comprising beeswax, a flavor, optionally a fat or hardened oil, and optionally a humectants,
(ii) coating the fluid mixture onto an article,
(iii) allowing or causing the mixture to solidify.

In yet another aspect, the invention provides a method of enhancing the flavor intensity and longevity of a flavored consumable product having a water activity of less than 0.85, the method comprising the coating a mixture of an edible wax and a flavor onto the surface of the consumable product.

### Detailed Description

The present invention relates to flavored coating for an article to be consumed. The flavored coating comprises a flavor, an edible wax, optionally a hardened oil or fat and optionally a humectant.

The wax is edible, solid at room temperature and easily liquefiable at temperatures that do not adversely affect volatile flavors.

Preferably the wax is beeswax. Beeswax is a tough wax formed from a mixture of several compounds having an empirical formula C₁₅H₅₁COOC₃₀H₆₁. Its main components are palmitate, palmitoleate, hydroxypalmitate and oleate esters of long-chain (30-32 carbons) aliphatic alcohols.

Beeswax has a melting point range of about 62 to about 64 °C. This is very advantageous in the present invention since it enables melting of the wax at temperatures which are generally tolerated by volatile flavors, i.e. which avoid undesirable degradation or unwanted reactions of the flavors.

Commercially available beeswax suitable for use in the present invention is available from a very wide number of sources, a non-limiting example of which is Beeswax JH-8104 (Lambert Technologies).

Of course, for certain flavors, it can be envisaged that the amounts of one or more components of beeswax can modified in order to provide a different olfactive profile. In such instances, the flavorist is capable of adjusting the quantities to suit the desired profile.

In the flavored coating, the edible wax is preferably present in an amount within the range of from 1 to 50% by weight, based on the total weight of the flavored coating, more preferably from 5 to 45% by weight, most preferably from 15 to 35% by weight.

The flavored coating preferably comprises a humectant. The humectant controls water activity and aroma release in a packaged foodstuff and further plasticises the flavored coating enabling easier and more effective application of the waxy coating onto the foodstuff.

Suitable humectants include glycerol, propylene glycol, sorbitol, corn syrup, sugar syrup. The most preferred is glycerol.

In the flavored coating, the humectant is preferably present in an amount of from 10 to 90% by weight, based on the total weight of the flavored coating, more preferably from 15 to 80% by weight, most preferably from 20 to 70% by weight.

In an especially preferred embodiment, the flavored coating further comprises a fat or hardened oil.

The advantage of adding hardened fat or oil together with the humectant is that it renders the flavored coating dry to the touch when the food is handled thus affording a tactile sensation preferred by many consumers. That is, without the added hardened oil or fat the flavored coating is "tacky" and taints the consumer's hands.

The fat or hardened oil should be present in a defined sufficient amount relative to the humectant in order to provide the clean, non-tacky coating feel to the foodstuff.

Thus, it is preferred that the weight ratio of fat or hardened oil to humectant is 2:3 or more, more preferably from 4:5 to 5:4 and most preferably in a ratio of 1:1.

The mixture of the edible wax with the humectant and fat or hardened oil should have a minimum melting temperature of about 37°C.

By hardened, it is meant that the oil or fat has an iodine value of less than 30, more preferably less than 20, even more preferably less than 10, most preferably less than 5.

Suitable fats and hardened oils include, but are not limited to, hardened vegetable oil, marine oil, animal fat, such as hardened tallow, or Vegetable fat, such as hardened palm oil, palm kernal oil and the like.

A "flavoring ingredient or composition", referred to herein as "flavor" encompasses flavor ingredients or compositions of current use in the food industry, of both natural and synthetic origin. It includes single compounds and mixtures. The flavor can comprise volatile or labile ingredients in liquid form, preferably with a log P in the range of -2 and 7, preferably 2 - 6. Specific examples of such components may be found in the current literature, e.g. in Fenaroli's Handbook of flavor ingredients, 1975, CRC Press; Synthetic Food adjuncts, 1947 by M.B. Jacobs, edited by Van Nostrand; or Perfume and Flavor Chemicals by S. Arctander, 1969, Montclair, New Jersey (USA). These substances are well known to a person skilled in the art of flavoring or aromatising consumer products, i.e. of imparting an odor or a flavor or taste to a consumer product traditionally flavored, or of modifying the taste of said consumer product. Natural extracts can also be included in the products of the invention. These include citrus extracts such as lemon, orange, lime, grapefruit, or mandarin oils or coffee, tea, mint, cocoa or essential oils of herbs and spices between other.

Examples of flavor ingredients or compositions are thus flavors of natural or synthetic origin. For example, synthetic flavor oils, flavoring aromatics, oils, essential oils, oleoresins and extracts derived from plants, for example from leaves, flowers, fruits, roots, rhizomes, stem, and so forth.

The flavor may be present in the form of a mixture with solvents, adjuvants, additives and/or other ingredients, for example those of current use in the flavor and/or food industry.

The flavor itself may be liquid at 40°C, more preferably at 30°C, and most preferably at 25°C, at 1 atmosphere. Where the flavor is solid, a solvent can be used to provide a solvent/flavor mixture in liquid form.

In the flavored coating, the flavor is preferably present in an amount within the range of from 0.001% to 50% by weight, based on the total weight of the flavored coating, more preferably from 5 to 45% by weight, most preferably from 10 to 30% by weight.

Other optional ingredients that can be present in or as part of the flavored coating include, but are not limited to, flavor adjuvants and flavor carriers.

In the context of the present invention, "flavor adjuvant" means an ingredient capable of imparting an additional added benefit such as color, a particular light resistance, chemical stability, and so on. A detailed description of the nature and type of adjuvant commonly used in flavoring bases cannot be exhaustive, though such ingredients are well known to a person skilled in the art.

In the context of the present invention "flavor carrier" means a material which is substantially neutral from a flavor point of view, insofar as it does not significantly alter the organoleptic properties of flavoring ingredients. The carrier may be a liquid or a solid. As a liquid carrier, non-limiting examples include an emulsifying system, i.e. a solvent and a surfactant system, or a solvent commonly used in flavors. A detailed description of the nature and type of solvents commonly used in flavor cannot be exhaustive. However, non-limiting examples of suitable solvents include propylene glycol, triacetine, triethyl citrate, benzylic alcohol, ethanol, vegetable oils or terpenes. As a solid carrier, non-limiting examples include absorbing gums or polymers, or encapsulating materials. Examples of such materials may comprise wall-forming and plasticizing materials, such as mono, di- or trisaccharides, natural or modified starches, hydrocolloids, cellulose derivatives, polyvinyl acetates, polyvinylalcohols, proteins or pectins, or the materials cited in reference texts such as H. Scherz, Hydrokolloids : Stabilisatoren, Dickungs- und Gehermittel in Lebensmittel, Band 2 der Schriftenreihe Lebensmittelchemie, Lebensmittelqualität, Behr's VerlagGmbH & Co., Hamburg, 1996. Encapsulation is a well known process to a person skilled in the art, and may be performed, for instance, using techniques such as spray-drying, agglomeration, extrusion, coacervation and the like. Spray-dried or extruded solid carriers are preferred.

The article upon which the waxy coating is applied is also referred to herein as a "substrate" for the flavored waxy coating. The substrate is preferably a dry or semi-dry substrate. The terms "dry" or "semi-dry" denote a substrate that has a water activity of 0.85 or lower, preferably 0.7 or lower, more preferably 0.5 or lower, even more preferably 0.4 or lower, e.g. 0.3 or lower.

Surprisingly, it has been found that the flavor delivery system of the present invention delivers exceptional aroma intensity and longevity when used in combination with a dry or semi-dry substrate but not with a substrate having a higher water activity.

Water activity is measured with an Aqualab CX-2 RH meter (Decagon Devices, Inc., Pullman, Washington, USA) at 25°C.

The preferably dry or semi-dry foodstuff may be a human or animal foodstuff.

Preferred human foodstuffs include coated nuts, breakfast cereals, protein and granola bars.

Preferred animal foodstuffs include dry or semi-dry pet foods. Particularly preferred are kibbles, biscuits, chewable treats.

The method of preparing an article having a flavored coating comprises the first step of preparing a fluid mixture comprising beeswax and a flavor. In order to render the mixture fluid, the beeswax may be melted first and the flavor incorporated therein or the solid beeswax and flavor may be mixed and then melted. Melting can be by any suitable method except that severe heating of beeswax (above about 85°C) may cause discoloration and so should be avoided. Intimate mixing of the beeswax and flavor can be performed by any suitable means though simple stirring is preferred.

In a next step the fluid mixture is coated onto an article. Coating can be performed by any suitable means which is capable of achieving a surface coating of the fluid mixture onto the article. Methods such as brushing, spraying and dipping are mentioned though the coating method is clearly not limited thereto.

In a further step, the coating is allowed to cool so as to solidify around the article. If necessary, artificial cooling apparatus and processes can be performed if it is desired to accelerate this step.

The invention is now illustrated with reference to the following examples where all amounts are % by weight unless expressed otherwise.

### Examples

### Example 1

### Dog Treats Comprising Wax-Encapsulated Flavor

Dog treats were prepared using the following ingredients in the amounts shown.

**Table 1**

| | Sample | | | | | | | |
|---|---|---|---|---|---|---|---|---|
| Ingredient | A | 1 | 2 | 3 | 4 | 5 | 6 | 7 |
| Dog Treats (1) | 96.0 | 95.4 | 95.2 | 95.5 | 97.5 | 95.0 | 97.0 | 97.5 |
| Hydrogenated Palm oil | 4.0 | 4.0 | 4.0 | 4.0 | - | 4.0 | - | 0.7 |
| Light Roast Chicken Flavor (2) | - | 0.6 | 0.8 | - | - | - | - | - |
| Chicken Flavor (3) | - | - | - | 0.5 | 0.5 | - | - | 0.5 |
| Beeswax (4) | - | - | - | - | 0.6 | | 0.6 | 0.6 |
| Glycerin | - | - | - | - | 1.4 | - | 1.4 | 0.7 |
| Bread Flavor (5) | - | - | - | - | - | 1.0 | 1.0 | - |

| | | | | | | | | |
|---|---|---|---|---|---|---|---|---|
| (1) Hill's Science Diet Dog Treats with real chicken (purchased at Petsmart, USA) (2) Firmenich Ref: 336807 04801TP0554 (3) Firmenich Ref: 572619 TPC0504 (4) JH-8104 (Lambert Technologies) (5) Firmenich Ref: 571160 P | | | | | | | | |

For samples A, 1 to 3 and 5, the palm oil was first melted and then coated evenly onto the treat, after which the treats were placed in a container together with the flavor (where present) and the container was shaken until even dispersion of the flavor was achieved.

For samples 4 and 6, the beeswax was heated gently until melted, after which the glycerin and flavor were added with stirring and the mixture kept warm. The treats were then heated in a microwave oven on high setting for 5 seconds and removed. The beeswax mixture was then coated into the treats and allowed to cool to ambient.

Sample 7 had the same extended aroma as sample 4 but with the benefit of being dry to the touch and easy to handle without coating the fingers.

### Example 2

### Further Dog Treats Comprising Wax-Encapsulated Flavor

Dog treats were prepared using the following ingredients in the amounts shown.

**Table 2**

| | Sample | | | | | |
|---|---|---|---|---|---|---|
| Ingredient | B | C | 8 | 9 | 10 | 11 |
| Dog Treats Soft Sticks (1) | 97.5 | 97.5 | 97.5 | 97.5 | 97.5 | 97.5 |
| Hydrogenated Palm oil | 2.5 | - | 1.9 | 2.1 | - | - |
| Light Roast Chicken Flavor (2) | - | - | 0.6 | - | 0.6 | - |
| Stewed Beef Flavor (3) | - | - | - | 0.4 | - | 0.4 |
| Beeswax (4) | - | 0.75 | - | - | 0.45 | 0.55 |
| Glycerin | - | 1.74 | - | - | 1.44 | 1.54 |
| Caramel color 400 (5) | - | 0.01 | - | - | 0.01 | 0.01 |

| | | | | | | |
|---|---|---|---|---|---|---|
| (1) Hill's Science Diet Jerky Plus (purchased at Petsmart, USA) (2) Firmenich Ref: 336807 04801TP0554 (3) Firmenich Ref: 868791 TPPF0554 (4) JH-8104 (Lambert Technologies) (5) DS 919858 | | | | | | |

For samples B, 8 and 9, the palm oil was first melted and then coated evenly onto the treat, after which the treats were placed in a container together with the flavor (where present) and the container was shaken until even dispersion of the flavor was achieved.

For samples C, 10 and 11, the beeswax was heated gently until melted, after which the glycerin, color and flavor were added with stirring and the mixture kept at a sufficiently high temperature to maintain a fluid mixture. The treats were then heated in a microwave oven on high setting for 5 seconds and removed. The beeswax mixture was then coated into the treats and allowed to cool to ambient.

## Claims

1. A flavored coating for an article, the flavored coating comprising a flavor, an edible wax for protecting the flavor, optionally a fat or hardened oil and optionally a humectants.

2. A flavored coating according to claim 1 wherein the edible wax is beeswax.

3. A flavored coating according to claim 1 wherein the edible wax is present in an amount of from 1 to 50% by weight, based on the total weight of the flavored coating.

4. A flavored coating according to claim1 wherein the flavor is present in an amount of from 0.001 to 50% by weight, based on the total weight of the flavored coating.

5. A flavored coating according to claim 1 wherein the humectant is present in an amount of from 10 to 90% by weight, based on the total weight of the flavored coating.

6. A flavored coating according to claim 1 wherein the weight ratio of humectant to fat or hardened oil is 2:3 or more, more preferably from 4:5 to 5:4 and most preferably in a ratio of about 1:1.

7. A flavored coating according to claim 1 wherein the fat or hardened oil, has an iodine value of less than 30.

8. A foodstuff comprising a flavored coating as defined in claim 1.

9. The foodstuff according to claim 8 having a water activity less of 0.85 or less as measured using an Aqualab CX-2 RH meter at 25°C.

10. A method of preparing an article comprising a flavored coating, comprising the steps of:
(i) preparing a fluid mixture comprising beeswax, a flavor, optionally a fat or hardened oil, and optionally a humectants,
(ii) coating the fluid mixture onto an article,
(iii) allowing or causing the mixture to solidify.

11. A method of enhancing the flavor intensity and longevity of a flavored consumable product having a water activity of less than 0.85, the method comprising the coating a mixture of an edible wax and a flavor onto the surface of the consumable product.
